# EUROPEAN PATENT APPLICATION

(11) **EP 4 613 796 A1**
(43) Date of publication of application: **10.09.2025**
(21) Application number: 24161736.4
(22) Date of filing: 06.03.2024
(51) Int. Cl.: C08G 81/02, C09D 11/101

(54) **STAR-SHAPED POLYMERS**

(71) Applicant: Evonik Operations GmbH, 45128 Essen (DE)
(72) Inventor: LIU, Kerh Li, 768008 Singapore (SG); GUO, Bing, 689873 Singapore (SG); GUO, Tommy, 128046 Singapore (SG); STRUCK, Susanne, 47198 Duisburg-Homberg (DE); HOLTHAUSEN, Michael, 45721 Halternam See (DE); FIEDEL, Michael, 45239 Essen (DE)
(74) Representative: Evonik Patent Association

(57) **Abstract**

A star-shaped polymer which is a reaction product of the following components:
a) 3-30 wt% of a polyamine with a molecular weight in the range of 600 g/mol to 10000 g/mol and an amine value between 200 and 1400 mg KOH/g
b) 40-90 wt% of a monofunctionalized polyether with a molecular weight in the range of 100 - 10000 g/mol that is amine reactive and is represented by structure I;

[R-(OCₚH_{q})ₘ-(OCᵣHₛ)ₙ-(OCₜHᵤ)ₒ-L]_{f}-G' (I)

R is a aliphatic, aromatic or arylaliphatic hydrocarbon
p, q, r, s, t, u are integers each independently ranging from 2 to 16
m+n+o ≥ 3
f is 1 or 2
L is O or NH
G' is a residue of a diepoxide, diisocyanate, diacids and/or their anhydride, diester and dihalide derivatives, uretdione, di(meth)acrylate, α,β-unsaturated acid or their ester or anhydride, acetoacetate or bis(carbonate)

c) 1-20 wt% of one or more aromatic anhydride, an aromatic monoacid and/or aromatic monoisocyanate;
d) 1-20 wt% of one or more aliphatic or aromatic epoxide.

## Description

### Field of invention

This invention relates to star-shaped polymers, their production and use in radiation curable inks and coating formulation as pigment dispersants.

Incorporation of high amount of organic pigments into radiation curable inks or coating formulations often leads to mixture of very high viscosity that is unacceptable for printing as well as coating applications. The high viscosity is caused by strong interactions between the pigment particles itself which are insoluble in the inks or coatings formulation.

Pigment dispersants that can interact with organic pigments while being compatible with the other components in the dispersing media can be used to disrupt the interparticle interactions and lower the formulation viscosity.

With sufficient amount of dispersant to cover surface of pigment particles, the pigment particles are kept separated even through storage and viscosity built up could be minimized or prevented. There are, however, limits to the amount of dispersant that can be added to an ink or coating formulation.

US10399051 teaches the use of highly effective dispersants to reduce viscosity of pigment paste in solvent-based coating formulations. The disclosed dispersants are based on polyethyleneimine grafted with polyester chains and fatty acids. The use of such dispersants, however, in solventless or radiation curable systems may not provide the necessary viscosity reduction and viscosity stability.

WO2005/010109 discloses the preparation of polyether grafted polyamine or polyimine using dibasic acid or their anhydride that do not contain any aliphatic carbon-carbon double bond. The product can be used to disperse solid particulates including pigments in organic solvent or water with or without further modifications. Further modifications are grafting of additional polyester chains onto residual amine functionality present and/or reaction of the residual amines with dibasic acid or anhydride and/or urea and/or peroxides. However, the substances do not provide the necessary viscosity reduction and viscosity stability required in pigment paste for challenging organic pigments.

WO2021/052998 discloses a polyether grafted polyethyleneimine with aromatic amide or aromatic imide modification and their use as pigment dispersants. Again, the substances do not provide the necessary viscosity reduction and viscosity stability required in pigment paste for challenging organic pigments.

These challenging organic pigments that proved to be much more difficult to disperse and stabilized than most pigments are for example, PR122 and PR57:1. This is especially true in solventless formulation, such as those of radiation curable inks or coatings.

It is a continuous and unending effort to develop high performing pigment dispersants to meet challenging application demands.

It is therefore an object of invention of the present invention to provide a polymer which can act as a dispersant, in which the disadvantages of the prior art are at least reduced and which delivers the necessary viscosity reduction and viscosity stability required in pigment pastes for challenging organic pigments.

This object is achieved by a star-shaped polymer which is a reaction product of the following components:
a) 3-30 wt% of a polyamine with a molecular weight in the range of 600 g/mol to 10000 g/mol and an amine value between 200 and 1400 mg KOH/g;
b) 40-90 wt% of a monofunctionalized polyether with a molecular weight in the range of 100 - 10000 g/mol that is amine reactive and is represented by structure I;

   [R-(OCₚH_{q})ₘ-(OCᵣHₛ)ₙ-(OCₜHᵤ)ₒ-L]_{f}-G' (I)

   R is a aliphatic, aromatic or arylaliphatic hydrocarbon
   p, q, r, s, t,u are integers each independently ranging from 2 to 16
   m+n+o ≥ 3
   f is 1 or 2
   L is O or NH
   G' is a residue of a diepoxide, diisocyanate, diacids and/or their anhydride, diester and dihalide derivatives, uretdione, di(meth)acrylate, α,β-unsaturated acid or their ester or anhydride, acetoacetate or bis(carbonate).
c) 1-20 wt% of one or more of an aromatic anhydride, an aromatic monoacid and/or aromatic monoisocyanate (one or more);
d) 1-20 wt% of one or more of an aliphatic or aromatic epoxide.

The star-shaped polymers according to the invention comprise polyether arms on a polyethyleneimine core with aromatic anhydride and aliphatic glycidyl ether functionalization.

Surprisingly, it could be shown that the inventive star-shaped polymers deliver a superior viscosity reduction and viscosity stability as a dispersant in pigment pastes of challenging organic pigments.

This surprising effect could be achieved by the inventive combination of reacting components a) to d) to obtain the unique star-shaped polymer according to the invention.

According to WO 2021/052998, the polyether chains on the polyethyleneimine core were obtained from alkoxylation of alkylene oxides instead of addition or condensation reaction of amine reactive polyethers. This represent one of the essential differences with the current invention. Equally important, component d) is missing in the disclosure of WO 2021/052998. The presence of component d) and necessarily together with components a), b) and c) in the reaction is essential to achieve a star-shaped polymer that provides the superior dispersing effect.

Component a) is preferably 3-30 wt% of a polyamine with a molecular weight in the range of 600 g/mol to 10000 g/mol and an amine value between 600 and 1400 KOH/g, more preferably an amine value between 800 and 1400 mg KOH/g.

Preferably Component a) is a polyamine selected from the group consisting of polyallylamine, poly(N-alkyl)allylamines, polyvinylamine, poly(alkylene)imine, polyamidoamine, amine-rich polymeric side streams from triethylenediamine production, amino alcohol condensates or mixtures thereof.

The poly(alkylene)imine may be linear or branched. A preferred poly(alkylene)imine is polyethyleneimine (PEI), more preferably a branched polyethyleneimine.

Component b) that is represented by structure (I) above is preferably characterized in that
R is a aliphatic hydrocarbon with one to twelve carbons
p, q, r, s, t, u are integers each independently ranging from 2 to 16
m+n+o ranging from 3 to 100, more preferably from 20 to 100
f is 1 or 2
L is O or NH
G' is a residue of a maleic anhydride, succinic anhydride, diethyl oxalate, phthalic anhydride.

Component b) is preferably obtained by reacting a polyethermonoamine or polyethermonoalcohol with substance G.

Suitable polyethermonoamine are e.g. methoxy-poly(ethylene oxide)amine, methoxy-poly(ethylene oxide-propyleneoxide)amine.

Suitable polyethermonoalcohols are e.g. methoxy-poly(ethylene oxide), methoxy-poly(ethylene oxide-propyleneoxide), butoxy-poly(ethylene oxide), methoxy-poly(ethylene oxide - styrene oxide), methoxy-poly(butylene oxide), nonylphenol-poly(ethylene oxide), methoxy-poly(tetramethylene oxide).

Substance G that gives rise to G' residue in structure (I) can be a diepoxide, diisocyanate, diacids and/or their anhydride, diester and dihalide derivatives, uretdione, diacrylate, α,β-unsaturated acid or their ester or anhydride, acetoacetate esters.

Suitable diepoxides are e.g. bisphenol A diglycidyl ether, hydrogenated bisphenol A diglycidyl ether, bisphenol F diglycidyl ether, neopentylglycol diglycidylether, 1,4-butanediol-diglycidylether, 1,6-hexanediol-diglycidylether, polyoxypropyleneglycol-diglycidyl ether, polyoxyethyleneglycol-diglycidyl ether , poly(tetramethylene oxide)-diglycidylether, 1,5-hexadiene diepoxide, glycerol diglycidyl ether, 3,4-epoxycyclohexylmethyl(3,4-epoxy) cyclohexanecarboxylate.

Suitable biscarbonates are polyethylene glycol) biscyclocarbonate, polypropylene glycol) bis(cyclocarbonate), adipate bis(cyclocarbonate), sebacate bis(cyclocarbonate), butanediol bis(cyclocarbonate) erythritol bis(carbonate), bis(carbonates) based on reaction products of diglycidyl ether and CO₂.

Suitable diisocyanates are aliphatic, cycloaliphatic or aromatic diisocyanates or mixtures thereof. Examples of such diisocyanates are 1,4-tetramethylenediisocyanate, 1,6-hexamethylenediisocyanate (HDI), 2,2,4-trimethyl-1,6-hexamethylenediisocyanate, 1,10-decamethylenediisocyanate, 1,4-cyclohexylenediisocyanate, p-phenylenediisocyanate, m-phenylenediisocyanate, 2,6-toluenediisocyanate, 2,4-toluenediisocyanate and mixtures thereof (TDI), tetramethylxylylene diisocyanate (TMXDI), p- and m-xylylenediisocyanate, 4,4'-diisocyanatodicyclohexylmethane (H12MDI), 3,3'-dimethyl-4,4'-bisphenylenediisocyanate, 3,3'-dimethyl-diisocyanatodiphenylmethane, the isomer mixtures of 2,4'- and 4,4'-diisocyanatodiphenylmethane (MDI), C36 dimer diisocyanate, isophorone diisocyanate (IPDI) and norbornane diisocyanate (NBDI) or their derivatives such as iso-cyanurates, allophanates, ureas, biurets and carbodiimides.

Suitable diacids and/or their anhydride, diester and dihalide derivatives are e.g. oxalic acid, diethyl oxalate, oxalyl chloride, succinic acid, succinic anhydride, oct(en)yl-, dec(en)yl- and dodec(en)ylsuccinic anhydride, fumaric acid, diethyl fumarate, maleic acid, maleic anhydride, diethyl maleate, succinic acid, succinic anhydride, diethyl succinate, glutaric acid, glutaric anhydride, adipic acid, adipic anhydride, diglycolic acid, pimelic acid, suberic acid, azelaic acid, sebacic acid, undecanedioic acid, dodecanedioic acid, hexadecanedioic acid, docosanedioic acid, dimerized fatty acids, mesaconic acid, malonic acid, itaconic acid, itaconic anhydride, citraconic acid, citraconic anhydride, hexahydro-, tetrahydro-, dihydro-, methylhexahydro- and methyltetrahydrophthalic acid, hexahydro-, tetrahydro-, dihydro-, methylhexahydro- and methyltetrahydrophthalic anhydride, 1,4- cyclohexanedicarboxylic acid, tetrahydrophthalic acid, phthalic acid, phthalic anhydride, isophthalic acid, terephthalic acid, dimethyl terephthalate, naphthalene dicarboxylic acid, dimethyl naphthalene-2,6-dicarboxylate, naphthalene anhydride, 3,6,9-trioxaundecanedioic acid, polyethylene glycol) bis(carboxymethyl) ether, α,ω-bis[2-[(3-carboxy-1-oxopropyl)amino]ethyl]-poly(ethylene glycol) and mixtures thereof.

Suitable uretdiones are e.g. hexamethylene diisocyante uretdione, toluenediisocyanate uretdione, diphenylmethane disocyanate uretdione.

Suitable di(meth)acrylates are e.g. 1,4-butanediol di(meth)acrylate, 1,6-hexanediol di(meth)acrylate, bisphenol A di(meth)acrylate, ethylene glycol di(meth)acrylate, tripropylene glycol di(meth)acrylate, neopentylglycol di(meth)acrylate, polyethylene glycol) di(meth)acrylate, polypropylene glycol) di(meth)acrylates, dicyclopentyldimethylene di(meth)acrylate, glycerol di(meth)acrylate as well as diisocyanates functionalized with 2 equivalents of 2-hydroxyethyl(meth)acrylate.

Suitable α,β-unsaturated acid or their ester or anhydride are e.g. acrylic anhydride, acrylic acid, acryloyl chloride, methyl acrylate, ethyl acrylate, methacrylic anhydride, methacryloyl chloride, methyl methacrylate, crotonic acid, crotonyl chloride, methyl crotonate.

Suitable acetoacetate esters can be any C1 to C8 ester of acetoacetate. t-Butyl ester is preferred due to a short reaction time and the ability to azotrope off the by-product t-butanol.

Component c) may be an aromatic anhydride, an aromatic monoacid and/or aromatic monoisocyanate or mixtures thereof.

Component c) is preferably an aromatic monoacid selected from the group consisting of . benzoic acid, phthalic acid, 2-piconilic acid , 1-naphthoic acid, 2-naphthoic acid, p-toluic acid, 2-ethylbenzoic acid, dimethylbenzoic acid, 3-hydroxybenzoic acid and mixtures thereof.

In another preferred embodiment component c) is an aromatic monoisocyanate selected from the group consisting of phenyl isocyanate, tolyl isocyanate, 1-naphthyl isocyanate, 2- naphthyl isocyanate and mixtures thereof.

In another preferred embodiment component c) is an aromatic anhydride selected from the group consisting of phthalic anhydride, 3-methyl phthalic anhydride, 4-methyl phthalic anhydride, 3-nitrophthalic anhydride, 4-nitrophthalic anhydride, 2,3-pyridinedicarboxylic anhydride, 3,4-pyridinedicarboxylic anhydride, 2,3-pyrazinedicarboxylic anhydride, 1,8-naphthalic anhydride, 1,2-naphthalic anhydride, 4-bromo-1,8-naphthalic anhydride, trimellitic anhydride, isatoic anhydride and mixtures thereof.

Component d) is preferably selected from the group consisting of aliphatic, cycloaliphatic, aromatic and/or araliphatic epoxides including glycidyl ether and glycidyl ester.

Suitable epoxides are C1-C20- alkyl glycidyl ether, phenyl glycidyl ether, cresyl glycidyl ether, naphthyl glycidyl ether, butyl glycidyl ether, p-tert.-butyl-phenyl glycidyl ether, 2-ethyl-hexyl glycidyl ether, C12-C14-glycidyl ether, allyl glycidyl ether, 2,3-epoxypropylneodecanoate, 1,2-octene oxide, 1,2-nonene oxide, 1,2-undecene oxide, 1 ,2-dodecene oxide, 1 ,2-octadecene oxide, 4- methyl-1 ,2-pentene oxide, 1,2-butene oxide, propene oxide, ethylene oxide, styrene oxide, butadiene monoxide, isoprene monoxide, cyclopentene oxide, 2-ethyl-1 ,2-butene oxide, butyl epoxystearate, 2-ethylhexyl 9,10-epoxyoctadecanoate, bisphenol A diglycidyl ether, bisphenol F diglycidyl ether, 3,4-epoxycyclohexylmethyl(3,4-epoxy) cyclohexanecarboxylate, bis[(3,4-epoxycyclohexyl)methyl] adipate , neopentylglycol diglycidyl ether, 1,4-butanediol diglycidyl ether, 1,6-hexanediol diglycidyl ether, 1,3-dihydroxybenzene diglycidyl ether, glycerin triglycidyl ether, trimethylolpropane triglycidyl ether, epoxidized soya bean oil, epoxidized linseed oil, and mixtures thereof.

More preferably component d) is selected from the group consisting of naphthyl glycidyl ether, butyl glycidyl ether, p-tert.-butyl-phenyl glycidyl ether, 2-ethyl-hexyl glycidyl ether, C12-C14-glycidyl ether, bisphenol A diglycidyl ether, bisphenol F diglycidyl ether and mixtures thereof.

In another preferred embodiment component d) is an aliphatic epoxide with at least four C or an aromatic epoxide with at least five C in the ring.

The invention also encompasses a process for producing a star-shaped polymer according to the invention comprising the steps of first reacting component b) with component a) for 1-8 hours at 25 - 200 °C and subsequently mixing component c) with component d) and reacting the mixture of c and d with the reaction product of component b) and a) at a temperature of 50 °C - 200 °C for 4 to 15 hours ;
or react component c) with the reaction product of component b) with component a) at a temperature of 50 °C - 200 °C for 4 to 15 hours and then react the reaction product with component d) at a temperature of 50 °C - 200 °C for 4 to 15 hours;
or react component d) with the reaction product of component b) with component a) at a temperature of 50 °C - 200 °C for 4 to 15 hours and then react the reaction product with component c) at a temperature of 50 °C - 200 °C for 4 to 15 hours.

The final reaction product of the produced according to the invention can be subjected to salification with acid or base, preferably ammonia or acetic acid.

The final reaction product can also be oxidized with peroxides preferably with hydrogen peroxide.

Surprisingly it was found that such additional reaction steps can improve the performance of the star shaped polymers further.

Preferably the process steps for producing a star-shaped polymer according to the invention are carried out solvent free.

The star shaped polymers according to the invention can advantageously be used as a dispersant either on its own or with other dispersants. Thus, a dispersant comprising a star shaped polymer according to the invention forms part of the present invention.

The star shaped polymers according to the invention are preferably used as a dispersant in pigment pastes.

A pigment paste comprising
10 wt% - 70 wt% of a pigment
1 wt% - 20 wt% of the star shaped polymer according to the invention
0 wt% - 2 wt% of a UV inhibitor
20 wt% - 75 wt% of a UV curable monomer(s) and/or oligomer(s)
is therefore also part of the invention.

The pigment paste preferably comprises a pigment that is selected from PR2, PR3, PR4, PR5, PR8, PR9, PR12, PR13, PR21, PR22, PR23, PR31, PR38, PR48:1, PR48:2, PR48:3, PR48:4, PR49:1, PR49:2, PR52:1, PR52:2, PR53:1, PR57:1, PR81:1, PR81:2, PR81:3, PR112, PR122, PR146, PR170, PR176, PR177, PR207, PR209, PR254, PR268, PR269, PB15, PB15:1, PB15:2, PB15:3, PB15:4, PB15:6, PG7, PG36, PO5, PO13, PO16, PO34, PO36, PO43, PO46, PO62, PO64, PO71, PO73, PY1, PY3, PY12, PY13, PY14, PY17, PY55, PY61, PY62, PY65, PY73, PY74, PY81, PY83, PY93, PY95, PY97, PY110, PY128, PY138, PY139, PY147, PY150, PY151, PY153, PY154, PY155, PY168, PY170, PY174, PY175, PY176, PY180, PY181, PY183, PV1, PV2, PV3, PV19, PV23, PV27, PV29, PBk6, PBk7, PBk11, PBk26, titanium dioxide or mixtures thereof.

Similarly, a radiation curable ink or a coating formulation comprising such dispersants or pigment pastes as described above are also part of the present invention.

### Examples

The acid value was determined according to ASTM D1639-90.

The amine value was determined according to ASTM D2074-07(2019).

Then non-volatile content (NV) was determined according to ASTM D2369-20.

For the examples below three different polyamines were used as component a) designated as A(1), A(2) and A(3).

A(1) was a commercial polyethyleneimine with a molecular weight of 25000 g/mol. It is a comparative polyamine with a molecular weight out of the scope of the invention.

A(2) was a commercial polyethyleneimine with a molecular weight of 2000 g/mol which is within the scope of the invention.

A(3) was polyamidoamine with a molecular weight of 900 g/mol which is within the scope of the invention.

### Preparation of A(3):

Diethylmaleate (172.2 g) was added into tetraethylenepentamine (404.5 g) at room temperature. The addition rate was regulated such that temperature of reaction mixture did not exceed 60 °C. Upon complete addition of diethylmaleate, the mixture was heated to 145 °C and hold for 6 hours, whereby ester functionality of diethylmaleate has been consumed. The obtained product is an amine-rich polyamidoamine and has amine value of 855 mgKOH/g and a non-volatile content of 99%

For the examples below two different monofunctionalized amine reactive polyethers were used as component b) designated as B(1) and B(2).

B(1) was a polyethermonoamine adduct with maleic anhydride and a molecular weight of 2000 g/mol.

B (2) was a polyethermonoamine adduct with maleic anhydride and a molecular weight of 1000 g/mol.

In addition, for Example 1 an amine reactive polyester was used instead of a monofunctionalized amine reactive polyether designated as E(1) as disclosed in WO2017/140538A1 which has a PEI core and polyester arms and aromatic anhydride functionalization. Polyester E(1) is an acid-functionalized polylactone with a molecular weight of 1000 g/mol.

### Preparation of B(1):

Polyethermonoamine with 33 ethylene oxide units and 10 propylene oxide units and a molecular weight around 2000 g/mol (200 g) was reacted with maleic anhydride (9.8 g) at room temperature for a period of 1 hour. The obtained product had an amine value of < 1 mgKOH/g, acid value of 27 mgKOH/g and a non-volatile content of 99%.

### Preparation of B(2)

Polyethermonoamine with 19 ethylene oxide units and 3 propylene oxide units and a molecular weight around 1000 g/mol (200 g) was reacted with maleic anhydride (19.6 g) at room temperature for a period of 1 hour. The obtained product had an amine value of < 1 mgKOH/g, acid value of 52 mgKOH/g and a non-volatile content of 98%.

For the examples below two different commercial aromatic anhydrides were used as component c) designated as C(1) and C(2).

C(1) was a naphthalic anhydride and C(2) was a phthalic anhydride

For the examples below two different commercial monoepoxides were used as component d) designated as D(1) and D(2).

D(1) was a C₁₂-C₁₄ alkyl glycidyl ether and D(2) was a p-tertiarybutyl phenyl glycidyl ether;

### Example 1

### Preparation of polyester E(1).

Lauric acid (10 g), ε-caprolactone (60 g) and δ-valerolactone (20 g) were mixed and heated to 40 °C. Zircomium (IV) butoxide (0.5g) was then added and the mixture further heated to 160 °C. The reaction was held at this temperature for 6 hours and the obtained product has acid value of 33 mgKOH/g and a non-volatile content of 99%.

Polyester E(1) was mixed with component A(1), a polyethyleneimine of molecular weight around 25000 g/mol, and reacted at 130 °C for 6 hours.

Component C(1), 1,8-naphthalic anhydride, was added to the mixture and further reaction was carried out at 80-120 °C (80 °C for 2 hours and 120 °C for 10 hours) for 12 hours. The amounts of the respective reactants used are shown in Table 1.

Example 1 is a comparative example according to WO2017/140538A1. The resulting polymer is designated as Comp1. Comp1 is a star-shaped polymer containing polylactone arms and a polyethyleneimine core with aromatic anhydride functionalization.

### Example 2

Component B(1) was mixed with component A(2), a polyethyleneimine with a molecular weight around 2000 g/mol (A2) and reacted at 50 °C for 2 hours.

The amounts of the respective reactants used are shown in Table 1.

Example 2 is a comparative example. The resulting polymer is designated as Comp2. Comp2 is a star-shaped polymer consisting polyether arms and polyethyleneimine core without further functionalization.

### Example 3

Component B(1) was mixed with component A(2), a polyethyleneimine with a molecular weight around 2000 g/mol (A2) and reacted at 50 °C for 2 hours.

Component C(1) - 1,8-naphthalic anhydride - was then added to the mixture and further reaction was carried out at 80-120 °C for 12 hours (80 °C for 2 hours and 120 °C for 10 hours).

The amounts of the respective reactants used are shown in Table 1.

Example 3 is a comparative example. The resulting polymer is designated as Comp3. Comp3 is a star-shaped polymer consisting of polyether arms and polyethyleneimine core with only aromatic anhydride functionalization.

### Example 4

Component B(1) was mixed with component A(2), a polyethyleneimine of molecular weight of 2.000 g/mol, and reacted at 50°C for 2 hours.

Component C(1) -1,8-naphthalic anhydride- and component D(1) -C12-14 alky glycidyl ether- were added to the mixture and further reaction was carried out at 80-120°C for 12 hours (80 °C for 2 hours and 120 °C for 10 hours)
The amounts of the respective reactants used are shown in Table 1.

The resulting polymer is designated as P1. P1 is a star-shaped polymer according to the invention comprising polyether arms and polyethyleneimine core with aromatic anhydride and aliphatic glycidyl ether functionalization.

### Example 5

Component B(1) was mixed with component A(2) -polyethyleneimine of molecular weight around 2000 g/mol- and reacted at 50 °C for 2 hours.

Component C(1) -1,8-naphthalic anhydride- and component D(2) -p-tertiarybutyl phenyl glycidyl ether-were added to the mixture and further reaction was carried out at 80-120 °C for 12 hours.

The amounts of the respective reactants used are shown in Table 1.

The resulting polymer is designated as P2. P2 is a star-shaped polymer according to the invention comprising polyether arms and polyethyleneimine core with aromatic anhydride and aromatic glycidyl ether functionalization.

### Example 6

Component B(1) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P3. P3 is a star-shaped polymer according to the invention comprising polyether arms and polyethyleneimine core with aromatic anhydride and aliphatic glycidyl ether functionalization.

### Example 7

Component B(1) and B(2) were mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P4. P4 is a star-shaped polymer according to the invention comprising polyether arms and polyethyleneimine core with aromatic anhydride and aliphatic glycidyl ether functionalization.

### Example 8

Component B(1) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P5. P5 is a star-shaped polymer according to the invention comprising polyether arms and polyethyleneimine core with aromatic anhydride and aliphatic glycidyl ether functionalization.

### Example 9

Component B(1) was mixed with component A(2) -polyethyleneimine of molecular weight of 2000 g/mol- and reacted at 50 °C for 2 hours.

Component C(2) -Phthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P6. P6 is a star-shaped polymer according to the invention comprising polyether arms and polyethyleneimine core with aromatic anhydride and aliphatic glycidyl ether functionalization.

### Example 10

Component B(2) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P7. P7 is a star-shaped polymer according to the invention comprising polyether arms and polyethyleneimine core with aromatic anhydride and aliphatic glycidyl ether functionalization.

### Example 11

Component B(1) was mixed with component A(3) -polyamidoamine with a molecular weight of 900 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P8. P8 is a star-shaped polymer according to the invention comprising polyether arms and polyamidoamine core with aromatic anhydride and aliphatic glycidyl ether functionalization.

### Example 12

Component B(1) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P9. P9 is a star-shaped polymer according to the invention comprising polyether arms and polyethyleneimine core with aromatic anhydride and aliphatic glycidyl ether functionalization.

### Example 13

Component B(1) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours
The amounts of the respective reactants used are shown in Table 1.

The resulting polymer is designated as P10. P10 is a star-shaped polymer according to the invention comprising polyether arms and polyethyleneimine core with aromatic anhydride and aliphatic glycidyl ether functionalization.

### Example 14

Component B(1) was mixed with component A(3) - polyamidoamine with a molecular weight of 900 g/mol - and reacted at 50 °C for 2 hours.

Component C(1) 1,8-naphthalic anhydride and D(1) p-tertiarybutyl phenyl glycidyl ether were added to the mixture and further reaction was carried out at 80-120 °C for 12 hours.

The amounts of the respective reactants used are shown in Table 1.

The resulting polymer is designated as P11. P11 is a star-shaped polymer according to the invention comprising polyether arms and polyamidoamine core with aromatic anhydride and aromatic glycidyl ether functionalization.

### Example 15

Component B(1) was mixed with component A(2) -polyethyleneimine of molecular weight around 2000 g/mol- and reacted at 50 °C for 2 hours.

Component C(1) -1,8-naphthalic anhydride- and component D(2) -p-tertiarybutyl phenyl glycidyl ether-were added to the mixture and further reaction was carried out at 80-120 °C for 12 hours.

The amounts of the respective reactants used are shown in Table 1.

The resulting polymer is designated as P12. P12 is a star-shaped polymer according to the invention comprising polyether arms and polyethyleneimine core with aromatic anhydride and aromatic glycidyl ether functionalization.

### Example 16

Component B(2) was mixed with component A(3) -polyamidoamine with a molecular weight of 900 g/mol- and reacted at 50 °C for 2 hours.

Component C(1) -1,8-naphthalic anhydride- and component D(2) -p-tertiarybutyl phenyl glycidyl ether-were added to the mixture and further reaction was carried out at 80-120 °C for 12 hours.

The amounts of the respective reactants used are shown in Table 1.

The resulting polymer is designated as P13. P13 is a star-shaped polymer according to the invention comprising polyether arms and polyamidoamine core with aromatic anhydride and aromatic glycidyl ether functionalization.

### Example 17

Component B(1) was mixed with component A(2) -polyethyleneimine of molecular weight around 2000 g/mol- and reacted at 50 °C for 2 hours.

Component C(1) -1,8-naphthalic anhydride- and component D(2) -p-tertiarybutyl phenyl glycidyl ether-were added to the mixture and further reaction was carried out at 80-120 °C for 12 hours.

The amounts of the respective reactants used are shown in Table 1.

The resulting polymer is designated as P14. P14 is a star-shaped polymer according to the invention comprising polyether arms and polyethyleneimine core with aromatic anhydride and aromatic glycidyl ether functionalization.

### Example 18

Component B(1) was mixed with component A(2) -polyethyleneimine of molecular weight of 2000 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P15. P15 is a star-shaped polymer according to the invention comprising polyether arms and polyethyleneimine core with aromatic anhydride and aliphatic glycidyl ether functionalization.

### Example 19

Component B(1) was mixed with component A(3) -polyamidoamine with a molecular weight of 900 g/mol- and reacted at 50 °C for 2 hours.

Component C(1) -1,8-naphthalic anhydride- and component D(1) -C12-14 alky glycidyl ether- were added to the mixture and further reaction was carried out at 80-120 °C for 12 hours.

The amounts of the respective reactants used are shown in Table 1.

The resulting polymer is designated as P16. P16 is a star-shaped polymer according to the invention comprising polyether arms and polyethyleneimine core with aromatic anhydride and aliphatic glycidyl ether functionalization.

**Table 1: Composition and properties of polymers Comp1 to Comp3 and P1 to P16 prepared as described in Examples 1 to 19**

| Polymer | Reactants [wt%] | | | | NV (%) | Acid value (mg KOH/g) | Amine value (mg KOH/g) |
|---|---|---|---|---|---|---|---|
| | A | B | C | D | | | |
| Comp1 | 8.9 A(1) | 86.3 E(1) | 4.8 C(1) | - | 100 | 28 | 19 |
| Comp2 | 8.4 A(2) | 91.6 B(1) | - | - | 100 | 15 | 66 |
| Comp3 | 8.0 A(2) | 87.5 B(1) | 4.5 C(1) | - | 100 | 5 | 42 |
| P1 | 7.0 A(2) | 76.5 B(1) | 3.9 C(1) | 12.6 D(1) | 100 | 8 | 29 |
| P2 | 7.2 A(2) | 78.3 B(1) | 4.0 C(1) | 10.5 D(2) | 100 | 5 | 33 |
| P3 | 9.9 A(2) | 62.7 B(1) | 9.7 C(1) | 17.7 D(1) | 100 | 7 | 42 |
| P4 | 8.6 A(2) | 49.0 B(1) | 4.8 C(1) | 15.4 D(1) | 100 | 6 | 36 |
| | | 22.2 B(2) | | | | | |
| P5 | 7.1 A(2) | 77.9 B(1) | 8.0 C(1) | 7.0 D(1) | 100 | 7 | 28 |
| P6 | 10.5 A(2) | 71.0 B(1) | 13.0 C(2) | 5.5 D(1) | 100 | 13 | 27 |
| P7 | 11.0 A(2) | 63.0 B(2) | 6.2 C(1) | 19.8 D(1) | 100 | 9 | 47 |
| P8 | 12.0 A(3) | 60.0 B(1) | 10.0 C(1) | 18.0 D(1) | 100 | 8 | 31 |
| P9 | 10.0 A(2) | 77.0 B(1) | 8.0 C(1) | 5.0 D(1) | 100 | 4 | 47 |
| P10 | 10.0 A(2) | 77.0 B(1) | 10.0 C(1) | 3.0 D(1) | 100 | 9 | 45 |
| P11 | 10.0 A(3) | 70.0 B(1) | 10.0 C(1) | 10.0 D(2) | 100 | 8 | 24 |
| P12 | 10.0 A(2) | 70.0 B(1) | 10.0 C(1) | 10.0 D(2) | 100 | 8 | 45 |
| P13 | 8.4 A(3) | 78.0 B(2) | 8.0 C(1) | 5.6 D(2) | 100 | 8 | 18 |
| P14 | 8.4 A(2) | 74.3 B(1) | 7.9 C(1) | 9.4 D(2) | 100 | 9 | 45 |
| P15 | 10.0 A(2) | 70.0 B(1) | 15.0 C(1) | 5.0 D(1) | 100 | 9 | 34 |
| P16 | 10.0 A(3) | 70.0 B(1) | 15.0 C(1) | 5.0 D(1) | 100 | 10 | 20 |

| | | | | | | | |
|---|---|---|---|---|---|---|---|
| NV (%) - non-volatile content, determined according to ASTM D2369-20 | | | | | | | |

### Example 20

### Preparation of PR122 pigment containing paste:

Pigment pastes I - X containing PR122 pigment were produced by first mixing components according to Table 2, except pigment PR122, into a homogenous solution.

The required amount of pigment PR122 was then added into the solution and mixed for 3 hours in a shaker with the aid of grinding beads. The final mixture was then allowed to cool to room temperature and the pigment paste was obtained after filtration through 100µm filter paper.

**Table 2. PR122 Pigment paste preparation for dispersant evaluation.**

| Content | Pigment Paste | | | | | | | | | |
|---|---|---|---|---|---|---|---|---|---|---|
| | I | II | III | IV | V | VI | VII | VIII | IX | X |
| GPTA (g) | 74 | 74 | 74 | 74 | 74 | 74 | 74 | 74 | 74 | 74 |
| UVI (g) | 1 | 1 | 1 | 1 | 1 | 1 | 1 | 1 | 1 | 1 |
| PR122 (g) | 20 | 20 | 20 | 20 | 20 | 20 | 20 | 20 | 20 | 20 |
| Comp1 (g) | 5 | | | | | | | | | |
| Comp2 (g) | | 5 | | | | | | | | |
| Comp3 (g) | | | 5 | | | | | | | |
| Comp4 (g) | | | | 5 | | | | | | |
| P9 (g) | | | | | 5 | | | | | |
| P2 (g) | | | | | | 5 | | | | |
| P4 (g) | | | | | | | 5 | | | |
| P7 (g) | | | | | | | | 5 | | |
| P12 (g) | | | | | | | | | 5 | |
| P14 (g) | | | | | | | | | | 5 |
| Total | 100 | 100 | 100 | 100 | 100 | 100 | 100 | 100 | 100 | 100 |

| | | | | | | | | | | |
|---|---|---|---|---|---|---|---|---|---|---|
| GPTA - Glycerol propoxylate triacrylate; PR122 - Pigment Red 122; UVI - UV inhibitor (BASF Irgastab^{®} UV 22). | | | | | | | | | | |

GPTA is a UV-curable monomer that act as a matrix/solvent for the pigment dispersion and becomes part of the inks layer upon curing.

Comp4 is a commercial dispersant produced by Lubrizol with polylactone arms and polyethyleneimine core used in UV inks.

### Example 21

### Preparation of PR57:1 pigment containing paste for UV inks composition:

Pigment pastes XI - XX containing PR57:1 pigment were obtained by first mixing components according to Table 3, except pigment PR57:1, into a homogenous solution.

The required amount of pigment PR57:1 was then added into the solution and mixed for 3 hours in a shaker, with the aid of grinding beads. The final mixture was then allowed to cool to room temperature and pigment paste was obtained after filtration through 100µm filter paper.

**Table 3. PR57:1 pigment paste preparation for dispersant evaluation.**

| Content | Pigment Paste | | | | | | | | | |
|---|---|---|---|---|---|---|---|---|---|---|
| | XI | XII | XIII | XIV | XV | XVI | XVII | XVIII | XIX | XX |
| GPTA (g) | 69 | 69 | 69 | 69 | 69 | 69 | 69 | 69 | 69 | 69 |
| UVI (g) | 1 | 1 | 1 | 1 | 1 | 1 | 1 | 1 | 1 | 1 |
| PR57:1 (g) | 25 | 25 | 25 | 25 | 25 | 25 | 25 | 25 | 25 | 25 |
| Comp1 (g) | 5 | | | | | | | | | |
| Comp2 (g) | | 5 | | | | | | | | |
| Comp3 (g) | | | 5 | | | | | | | |
| Comp4 (g) | | | | 5 | | | | | | |
| P1 (g) | | | | | 5 | | | | | |
| P2 (g) | | | | | | 5 | | | | |
| P4 (g) | | | | | | | 5 | | | |
| P5 (g) | | | | | | | | 5 | | |
| P12 (g) | | | | | | | | | 5 | |
| P16 (g) | | | | | | | | | | 5 |
| Total | 100 | 100 | 100 | 100 | 100 | 100 | 100 | 100 | 100 | 100 |

| | | | | | | | | | | |
|---|---|---|---|---|---|---|---|---|---|---|
| GPTA - Glycerol propoxylate triacrylate PR57:1 - Pigment Red 57:1 UVI - UV inhibitor (BASF Irgastab^{®} UV 22) | | | | | | | | | | |

Comp4 is a commercial dispersant from Lubrizol with polylactone arms and polyethyleneimine core used in UV inks application.

### Example 22

### Viscosity measurement of PR122 pigment containing pastes before and after storage

Viscosity of the pigment paste was measured with a rotational rheometer (Anton Paar 302) at 100 s⁻¹ shear rate and a Temperature of 25 °C, immediately after preparation. The value is indicated in Table 4 as viscosity t=0.

The same pigment paste was then aged at 50 °C in a storage oven for seven days. It's viscosity was again measured at 100 s⁻¹ shear rate at 25 °C. The value is indicated in Table 4 as viscosity t=7d, T=50 °C.

Table 4 shows the results of the viscosity measurements for pigment pastes I to X containing pigment PR122 and as dispersants prior art polymers Comp1 to Comp4 as well as polymers P2, P4, P7, P9, P12 and P14 according to the invention.

**Table 4: Viscosity of PR122 pigment paste at 100 s⁻¹ shear rate**

| Pigment paste | Viscosity (Pa.s) t=0 | Viscosity (Pa.s) t=7d, T=50°C |
|---|---|---|
| I | 2.48 | Gel |
| II | 1.79 | 3.09 |
| III | 0.85 | 2.02 |
| IV | 1.93 | 2.81 |
| V | 0.57 | 1.29 |
| VI | 0.65 | 1.34 |
| VII | 0.62 | 1.30 |
| VIII | 0.65 | 1.27 |
| IX | 0.50 | 1.35 |
| X | 0.53 | 1.41 |

In order to use the pigment paste in an UV curable ink composition it is required that the initial pigment paste viscosity at t=0 is below 1.0 Pa.s and that viscosity after storage (t=7 days, T=50°C) remains below 2.0 Pa.s.

Pigment pastes I-IV which contained prior art dispersants Comp1 - Comp4 all showed unacceptable viscosity and viscosity stability. The initial viscosity as well as the viscosity after storage is too high and in one instance (pigment paste I) it couldn't even be measured because of gel formation. Pigment paste III met the requirement of an initial viscosity below 1 Pa.s but the viscosity after storage was 2.02 Pa.s which is not acceptable for commercial use. Also the commercial dispersant that is effective for pigments with easier dispersibility fails for pigment pastes containing PR122.

Pigment pastes comprising the polymers according to the invention achieved a viscosity much lower than 1 Pa.s at t=0 and much lower than 2.0 Pa.s after storage for 7 days at 50°C. The polymers according to the invention are far superior to all tested prior art dispersants.

### Example 23

### Viscosity measurement of PR57:1 pigment pastes before and after storage

Viscosity of the pigment paste was measured with a rotational rheometer (Anton Paar 302) at 100 s⁻¹ shear rate at 25 °C, immediately after preparation. The value is indicated as viscosity t=0.

The same pigment paste was then aged at 50 °C in a storage oven for 1 week. It's viscosity was again measured at 100 s⁻¹ shear rate at 25 °C. The value is indicated in Table 5 as viscosity t=0, T=50 °C.

Table 5 shows the results of the viscosity measurements for pigment pastes XI to XX containing pigment PR57:1 and as dispersants prior art polymers Comp1 to Comp4 as well as polymers P1, P2, P4, P5, P12 and P16 according to the invention.

**Table 5: Viscosity of PR57:1 pigment paste at 100 s⁻¹ shear rate**

| Pigment paste | Viscosity (Pa.s) t=0 | Viscosity (Pa.s) t=7d, T=50 °C |
|---|---|---|
| XI | 1.97 | 4.77 |
| XII | 0.85 | 3.08 |
| XIII | 1.12 | 4.12 |
| XIV | 1.60 | 2.60 |
| XV | 0.68 | 2.25 |
| XVI | 0.73 | 1.65 |
| XVII | 0.94 | 1.84 |
| XVIII | 0.68 | 1.49 |
| XIX | 0.72 | 1.59 |
| XX | 1.09 | 1.45 |

Pigment pastes XI to XX have a higher content of pigment. Therefore higher viscosities than indicated in example 22 are acceptable.

In order to use the pigment paste of the present example having a higher pigment content in an UV curable ink composition it is required that the initial pigment paste viscosity at t=0 is below 1.25 Pa.s and viscosity after storage (t=7 days, T=50 °C) remains below 2.5 Pa.s.

Pigment pastes XI-XIV which contained prior art dispersants Comp1 to Comp4 all showed unacceptable viscosity and viscosity stability. While the initial viscosity in pastes XII and XIII are acceptable, the viscosity after storage is too high for all pigment pastes containing prior art dispersants which is not acceptable for commercial use.

Pigment pastes comprising the polymers according to the invention achieved a vicosity much lower than 1.5 Pa.s at t=0 and much lower than 2.5 Pa.s after storage for 7 days at 50 °C. The polymers according to the invention are far superior to all tested prior art dispersants.

## Claims

1. Star-shaped polymer which is a reaction product of the following components:
a) 3-30 wt% of a polyamine with a molecular weight in the range of 600 g/mol to 10000 g/mol and an amine value between 200 and 1400 mg KOH/g
b) 40-90 wt% of a monofunctionalized polyether with a molecular weight in the range of 100 - 10000 g/mol that is amine reactive and is represented by structure I;
[R-(OCₚH_{q})ₘ-(OCᵣHₛ)ₙ-(OCₜHᵤ)ₒ-L]_{f}-G' (I)
R is a aliphatic, aromatic or arylaliphatic hydrocarbon
p, q, r, s, t, u are integers each independently ranging from 2 to 16
m+n+o ≥ 3
f is 1 or 2
L is O or NH
G' is a residue of a diepoxide, diisocyanate, diacids and/or their anhydride, diester and dihalide derivatives, uretdione, di(meth)acrylate, α,β-unsaturated acid or their ester or anhydride, acetoacetate, or bis(carbonate)
c) 1-20 wt% of one or more of an aromatic anhydride, an aromatic monoacid and/or aromatic monoisocyanate;
d) 1-20 wt% of one or more of an aliphatic or aromatic epoxide.

2. Star shaped polymer according to claim 1, **characterized in that** component a) is selected from the group consisting of polyallylamine, poly(N-alkyl)allylamines, polyvinylamine, poly(alkyleneimine), polyamidoamine or mixtures thereof.

3. Star shaped polymer according to claim 1, **characterized in that** component b) is represented by structure (I) with
R being an aliphatic hydrocarbon with one to twelve carbons
p, q, r, s, t, u are integers each independently ranging from 2 to 16
m+n+o ranging from3 to 100
f is 1 or 2
L is O or NH
G' is a residue of a maleic anhydride, succinic anhydride, diethyl oxalate, phthalic anhydride

4. Star shaped polymer according to claim 1, **characterized in that** component c) is an aromatic anhydride selected from the group consisting of phthalic anhydride, 3-methyl phthalic anhydride, 4-methyl phthalic anhydride, 3-nitrophthalic anhydride, 4-nitrophthalic anhydride, 2,3-pyridinedicarboxylic anhydride, 3,4-pyridinedicarboxylic anhydride, 2,3-pyrazinedicarboxylic anhydride, 1,8-naphthalic anhydride, 1,2-naphthalic anhydride, 4-bromo-1,8-naphthalic anhydride, trimellitic anhydride, isatoic anhydride and mixtures thereof.

5. Star shaped polymer according to claim 1, **characterized in that** component c) is an aromatic monoacid selected from the group consisting of benzoic acid, phthalic acid, 2-piconilic acid, 1-naphthoic acid, 2-naphthoic acid, p-toluic acid, 2-ethylbenzoic acid, dimethylbenzoic acid, 3-hydroxybenzoic acid and mixtures thereof.

6. Star shaped polymer according to claim 1, **characterized in that** component c) is an aromatic monoisocyanate selected from the group consisting of phenyl isocyanate, tolyl isocyanate, 1-naphthyl isocyanate, 2- naphthyl isocyanate and mixtures thereof.

7. Star shaped polymer according to claim 1, **characterized in that** component d) selected from the group consisting of aliphatic, cycloaliphatic, aromatic and araliphatic epoxides and mixtures thereof.

8. Star shaped polymer according to claim 7, **characterized in that** component d) is selected from the group consisting of naphthyl glycidyl ether, butyl glycidyl ether, p-tert.-butyl-phenyl glycidyl ether, 2-ethyl-hexyl glycidyl ether, C12-C14-glycidyl ether, bisphenol A diglycidyl ether, bisphenol F diglycidyl ether or mixtures thereof and mixtures thereof.

9. Star shaped polymer according to claim 7, **characterized in that** component d) is an aliphatic epoxide with at least four C or an aromatic epoxide with at least five C in the ring.

10. Process for producing a star-shaped polymer according to claim 1 comprising the steps of first reacting component b) with component a) for 1-8 hours at 25 - 200 °C and
subsequently mixing component c) with component d) and reacting the mixture of c) and d) with the reaction product of component b) and a) at a temperature of 50 °C - 200 °C for 4 to 15 hours or react component c) with the reaction product of component b) with component a) and then react the reaction product with component d)
or react component d) with the reaction product of component b) with component a) and then react the reaction product with component c).

11. Process for producing a star-shaped polymer according to claim 10, **characterized in that** after the reaction the reaction product is subjected to salification with acid or base.

12. Process for producing a star-shaped polymer according to claim 10, **characterized in that** after the reaction the reaction product is oxidized with peroxides

13. Process for producing a star-shaped polymer according to claim 10, **characterized in that** the steps are carried out solvent free.

14. A dispersant comprising a star shaped polymer according to any one of claims 1 to 9.

15. A pigment paste comprising
10wt% - 70 wt% of a pigment
1wt% - 20 wt% of the star shaped polymer according to any one of claims 1 to 9
0 wt% - 2 wt% of a UV inhibitor
20 wt% - 75 wt% of a UV curable monomer(s) and/or oligomer(s)

16. A pigment paste according to claim 15, **characterized in that** the pigment is selected from PR2, PR3, PR4, PR5, PR8, PR9, PR12, PR13, PR21, PR22, PR23, PR31, PR38, PR48:1, PR48:2, PR48:3, PR48:4, PR49:1, PR49:2, PR52:1, PR52:2, PR53:1, PR57:1, PR81:1, PR81:2, PR81:3, PR112, PR122, PR146, PR170, PR176, PR177, PR207, PR209, PR254, PR268, PR269, PB15, PB15:1, PB15:2, PB15:3, PB15:4, PB15:6, PG7, PG36, PO5, PO13, PO16, PO34, PO36, PO43, PO46, PO62, PO64, PO71, PO73, PY1, PY3, PY12, PY13, PY14, PY17, PY55, PY61, PY62, PY65, PY73, PY74, PY81, PY83, PY93, PY95, PY97, PY110, PY128, PY138, PY139, PY147, PY150, PY151, PY153, PY154, PY155, PY168, PY170, PY174, PY175, PY176, PY180, PY181, PY183, PV1, PV2, PV3, PV19, PV23, PV27, PV29, PBk 6, PBk7, PBk11, PBk26, titanium dioxide.

17. A radiation curable ink or coating formulation comprising dispersant according to claim 14 or a pigment paste according to claims 15 or 16.
